# EUROPEAN PATENT APPLICATION

(11) **EP 1 479 812 A1**
(43) Date of publication of application: **24.11.2004**
(21) Application number: 04291174.3
(22) Date of filing: 06.05.2004
(51) Int. Cl.: D06F 37/20, F16F 7/09

(54) **Damper for washing machine**

(30) Priority: 20.05.2003 KR 2003031765; 20.05.2003 KR 2003031767
(71) Applicant: LG ELECTRONICS INC., Seoul (KR)
(72) Inventor: Kim, Joon Woo, Gwangmyeong-si Gyeonggi-do (KR); Kim, Dong Won, Gwangmyeong-si Gyeonggi-do (KR); Kim, Young Ho, Seoul (KR); Woo, Ki Chul, LG Electronics Inc., Seoul (KR)
(74) Representative: Pichat, Thierry

(57) **Abstract**

Disclosed is a damper (8) for a washing machine, the damper including an external electric source, a movable part (168,169) for adjusting damping force using the external electric source, a damping pad (170) for varying an exerting state of the damping force in response to an operation of the movable part, a pad holder (167) for supporting the damping pad, a cylinder (161) contacting the damping pad to generate the damping force, a rod (162) inserted in the cylinder. The cylinder is connected to one of a movable part and case of the washing machine, and the rod is connected to the other of the movable part and case of the washing machine. The pad holder is disposed on an outer circumference of the rod.

## Description

### BACKGROUND OF THE INVENTION

### Field of the Invention

The present invention relates to a damper for a washing machine, and more particularly, to a damper that is designed to exert a multiple stages of damping force in response to an amount of vibration generated in the washing machine to properly attenuate the vibration, small and large, thereby stably operating the washing machine under a low noise state.

More particularly, the present invention relates a multiple-stage damper for a washing machine, which is designed such that a damping constant can be adjusted by electric power applied thereto in response to a vibration state of the washing machine, thereby more effectively attenuating the vibration of the washing machine.

### Description of the Related Art

Generally, a washing machine is classified according to a washing method into a drum type, an agitator type, and a pulsator type. Particularly, the drum type washing machine has a rotational drum provided at an inner wall with a protruded member, being designed to perform washing using physical impact generated when the laundry is ascended by the protruded portion along an inner circumference of the drum drops. In recent years, such a drum type washing machine has been widely used as a household washing machine as it has advantages of reducing the damage of the laundry and saving water.

The pulsator type washing machine includes an upright drum having an opened top and a pulsator installed on an inner bottom of the drum. The pulsator type washing machine is designed to perform washing using rotational force of the pulsator or the drum. The agitator type washing machine includes an upright drum having an opened top and an agitator installed in the drum, thereby performing washing using forced water flow generated by the rotation of the agitator.

The washing machine may be further classified according to a variety of method. For example, it can be classified according to a laundry loading method into a front-loading type where the laundry is loaded through the front, a top-loading type where the laundry is loaded through the top, and a side-loading type where the laundry is loaded through the side.

Regardless of the washing method and the laundry loading method, all of the washing machines have a motor and a movable part rotated by the motor. When the movable part is rotated by the motor, vibration is generated in the washing machine, causing the noise and the abnormal operation of the washing machine. For example, the vibration may cause a variety of problems such as a walking phenomenon where an installed location of the washing machine is displaced and an RPM reduction of the movable part by friction between the movable part and a stationary part. Therefore, the washing machine manufactures have aspired to develop a method and system that can attenuate the vibration generated when the washing machine is operated. The conventional washing machine has employed a one-stage damper having a fixed damping constant to attenuate the vibration. That is, regardless of the operation state of the washing machine, a fixed damping constant is applied to the movable part. However, since the vibration generated in the movable part is varied at every stroke of the washing machine, it is not preferable that the fixed damping constant is applied to the movable part.

That is, the operation of the washing machine is done going through a small vibration section and a large vibration section. For example, in a variable RPM section such as an initial stage of a dewatering cycle where the RPM of the movable part is varied, relatively large vibration is generated. In a steady RPM section where the RPM of the movable part is not varied, relatively small vibration is generated.

To solve the above problem, a two-stage damper that can attenuate the vibration in response to a physical amount of vibration has been proposed. However, since such a two-stage damper performs the damping operation according to an amount of one-dimensional vibration, there is a problem that the vibration cannot be properly attenuated.

In addition, while the amount of vibration is linearly varied, the damping constant of the damper is not linearly varied. That is, since the damping constant of the damper is varied by a predetermined step, the vibration variably generated in the movable part cannot be quickly attenuated. Furthermore, since a method for positively controlling the damping constant of the damper has not been proposed, there is a problem that it is difficult to generally control the washing machine.

Meanwhile, since the conventional damper is designed to exert its damping force only in a longitudinal direction thereof, it is difficult to attenuate vibration generated by a conical rotation.

### SUMMARY OF THE INVENTION

Accordingly, the present invention is directed to a damper for a washing machine that substantially obviates one or more problems due to limitations and disadvantages of the related art.

An object of the present invention is to provide a damper for a washing machine, which can provide a stable operation to the washing machine by positively controlling the operation state of the washing machine.

Another object of the present invention is to provide a damper for a washing machine, which can positively alleviate vibration generated in the washing machine in accordance with a condition preset by a user.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a damper for a washing machine, comprising: an external electric source; a movable part for adjusting damping force using the external electric source; a damping pad for varying an exerting state of the damping force in response to an operation of the movable part; a pad holder for supporting the damping pad; a cylinder contacting the damping pad to generate the damping force, the cylinder being connected to one of a movable part and case of the washing machine; and a rod inserted in the cylinder and connected to the other of the movable part and case of the washing machine, the pad holder being disposed on an outer circumference of the rod.

In an aspect of the present invention, there is provided a damper for a washing machine, comprising: an external electric source; an electromagnet for selectively generating an magnetic field by the external electric source; a pad holder for fixing a magnetic member operated by the magnetic field; a damping pad supported on the pad holder; a pad holder for supporting the damping pad; a cylinder contacting the damping pad to generate the damping force, the cylinder being connected to one of a movable part and case of the washing machine; and a rod for fixing the electromagnet, the rod being inserted in the cylinder and connected to the other of the movable part and case of the washing machine, the pad holder being disposed on an outer circumference of the rod.

In another aspect of the present invention, there is provided a damper for a washing machine, comprising: an external electric source; a thermal expanding member selectively expanding by the external electric source; a sliding rod displacing by the thermal expanding member; a pad holder disposed around an outer circumference of the sliding rod; a damping pad supported on the pad holder; a cylinder contacting the damping pad to generate the damping force, the cylinder being connected to one of a movable part and case of the washing machine; and a rod connected to the sliding rode, inserted in the cylinder, and connected to the other of the movable part and case of the washing machine.

In a further aspect of the present invention, there is provided a damper for a washing machine, comprising: an external electric source; a thermal expanding member selectively expanding by the external electric source; a pad holder compressed by the thermal expanding member; a damping pad formed on an outer circumference of the pad holder; a cylinder contacting the damping pad to generate the damping force, the cylinder being connected to one of a movable part and case of the washing machine; and a rod connected to the sliding rode, inserted in the cylinder, and connected to the other of the movable part and case of the washing machine.

In still another aspect of the present invention, there is provided a damper for a washing machine, comprising: a stationary case disposed in the washing machine; a movable part disposed in the washing machine; a cylinder connected to one of the stationary case and the movable part; a rod inserted in the cylinder, the rod being connected to the other of the stationary case and the movable part; a damping pad contacting an inner circumference of the cylinder to selectively perform damping; a pad holder for supporting the damping pad; and a movable part for adjusting a state of the pad holder using the external electric source.

According to the present invention, the damper is designed to quickly attenuate the vibration generated in the washing machine, thereby realizing the low vibration/low noise washing machine.

In addition, the damper is not easily damaged even when strong vibration is transmitted from the movable part.

Furthermore, the damper of the present invention is designed to positively control the operation of the washing machine in response to a current operation state of the washing machine, making it possible to stably operate the washing machine. In addition, since damping force of the washing machine can be adjusted in response to a preset condition set by the user, the vibration of the washing machine can be properly attenuated regardless of its current processing cycle.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a perspective view of a drum type washing machine where a damper according to a first embodiment of the present invention is employed;

Fig. 2 is a sectional view of the damper depicted in Fig. 1;

Fig. 3 is a sectional view taken along the line A-A' of Fig. 2;

Fig. 4 is a sectional view of a damper according to a first embodiment, illustrating a damping operation for attenuating transient vibration of a drum when a washing machine is in an initial dewatering operation;

Fig. 5 is a sectional view of a damper according to a first embodiment, illustrating a damping operation for attenuating relatively small vibration of a drum when a washing machine is in a steady dewatering operation;

Fig. 6 is a sectional view of a damper according to a second embodiment of the present invention;

Fig. 7 is a sectional view of a damper according to a second embodiment, illustrating a damping operation for attenuating transient vibration of a drum when a washing machine is in an initial dewatering operation;

Fig. 8 is a sectional view of a damper according to a second embodiment, illustrating a damping operation for attenuating relatively small vibration of a drum when a washing machine is in a steady dewatering operation;

Fig. 9 is a sectional view of a damper according to a third embodiment of the present invention;

Fig. 10 is a sectional view of a damper according to a third embodiment, illustrating a damping operation for attenuating transient vibration of a drum when a washing machine is in an initial dewatering operation;

Fig. 11 is a sectional view of a damper according to a third embodiment, illustrating a damping operation for attenuating relatively small vibration of a drum when a washing machine is in a steady dewatering operation;

Fig. 12 is a sectional view of a damper according to a fourth embodiment of the present invention;

Fig. 13 is a graph illustrating a test result of the fourth embodiment;

Fig. 14 is a sectional view of a damper according to a fifth embodiment of the present invention;

Fig. 15 is a sectional view of a damper according to a fifth embodiment, illustrating a damping operation for attenuating transient vibration of a drum when a washing machine is in an initial dewatering operation;

Fig. 16 is a sectional view of a damper according to a fifth embodiment, illustrating a damping operation for attenuating relatively small vibration of a drum when a washing machine is in a steady dewatering operation;

Fig. 17 is a sectional view of a damper according to a sixth embodiment of the present invention;

Fig. 18 is a sectional view taken along the line B-B' of Fig. 17;

Fig. 19 is a sectional view of a damper according to a sixth embodiment, illustrating a damping operation for attenuating transient vibration of a drum when a washing machine is in an initial dewatering operation; and

Fig. 20 is a sectional view of a damper according to a sixth embodiment, illustrating a damping operation for attenuating relatively small vibration of a drum when a washing machine is in a steady dewatering operation.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

In the embodiments of the present invention, a drum type washing machine is exemplified. However, the present invention is not limited to the drum type washing machine. The present invention can be applied to a variety of devices generating vibration as well as other types of the washing machine.

### First Embodiment

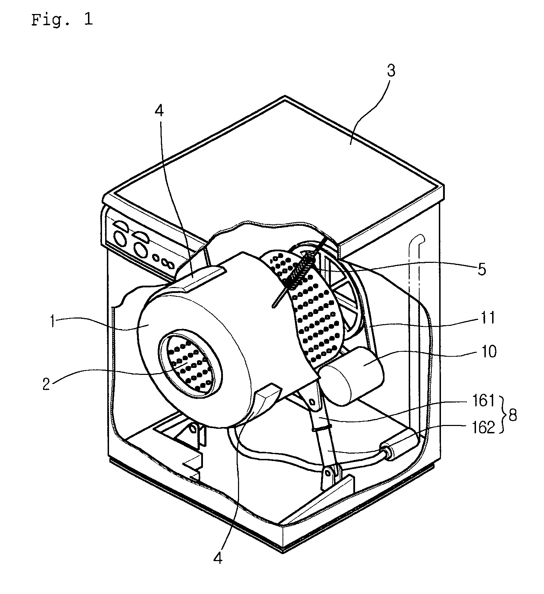

Fig. 1 shows a perspective view of a drum type washing machine where a damper according to a first embodiment of the present invention is employed.

As shown in the drawing, a drum type washing machine includes a case 3, a tub 1 disposed in the case 3 to storing water, a drum 2 disposed in the tub 1 to receive the laundry, and a driving motor 10 disposed on a rear side of the tub 1 to rotate the drum 2.

The operation of the drum type washing machine will be described hereinafter.

Rotational force of the driving motor 10 is transmitted to the drum 2 via a belt 11. When the drum 2 rotates, the laundry loaded in the drum 2 rotates together with the drum 2. At this point, since the drum 2 rotates with a relatively low RPM, the laundry ascends by the rotation of the drum and drops by a gravity to collide with the water contained in the tub 1. By colliding force between the laundry and the water, dirts and contaminants stuck on the laundry are removed. Although the driving force of the driving motor 10 is transmitted to the drum via the belt 11 in this embodiment, the driving motor 10 may be designed to directly rotate the drum 2. Even when the driving motor is directly connected to the drum 2, it will be apparent that the vibration is generated by the rotation of the drum 2.

In addition, the washing machine further includes a weight 4 disposed on an outer circumference of the tub 1 to correct the center of gravity of the tube 1 in all directions, a spring 5 having opposite ends respectively connected to the case 3 and the tub 1 to alleviate vibration generated from both the tub 1 and the drum 2, and a damper 8 having opposite ends respectively connected to the case 3 and the tub 1 to attenuate vibration generated in the tub 1.

The weight 4 is designed to correct the center of gravity of the tub 1 to radically alleviate the vibration that may be generated by the eccentric center of gravity of the tub 1.

The vibration generated by the operation of the tub 1 is first absorbed by the spring 5 and is then attenuated by the damper 8. As a result, the vibration generated by the operation of the tube 1 can be quickly removed.

In detail, the damper includes a cylinder 161 of which one end is fixed to the tub 1, and a rod 162 of which one end is fixed to the case 3 and inserted into the cylinder 161. Of course, the damper 8 may be constructed such that the rod 162 is connected to the tub 1 and the cylinder is connected to the case 3.

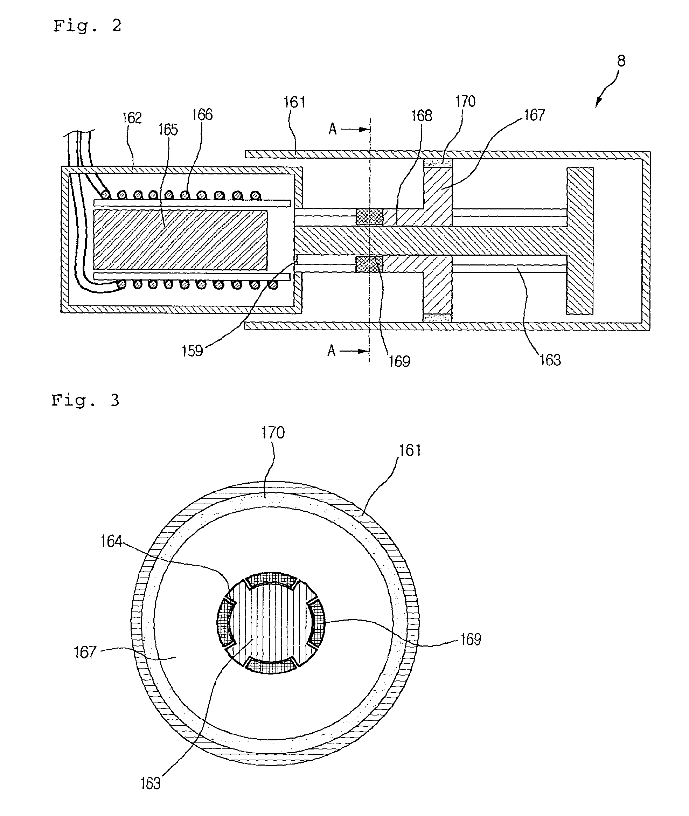

Describing operation of the damper 8, a damping pad is inserted between the rod 162 and the cylinder 161 inserted into the rod 162, and is in contact with an inner circumference of the cylinder 161. When vibration generated from the tub 1 is transferred to the cylinder 161 so that the cylinder 161 and the rod 162 are displaced different with each other in the length direction, damping is performed by a frictional force between the inner circumference of the cylinder 161 and the damping pad (see numeral 170 of Fig. 2).

Shape and structure of the damper will be described hereinafter.

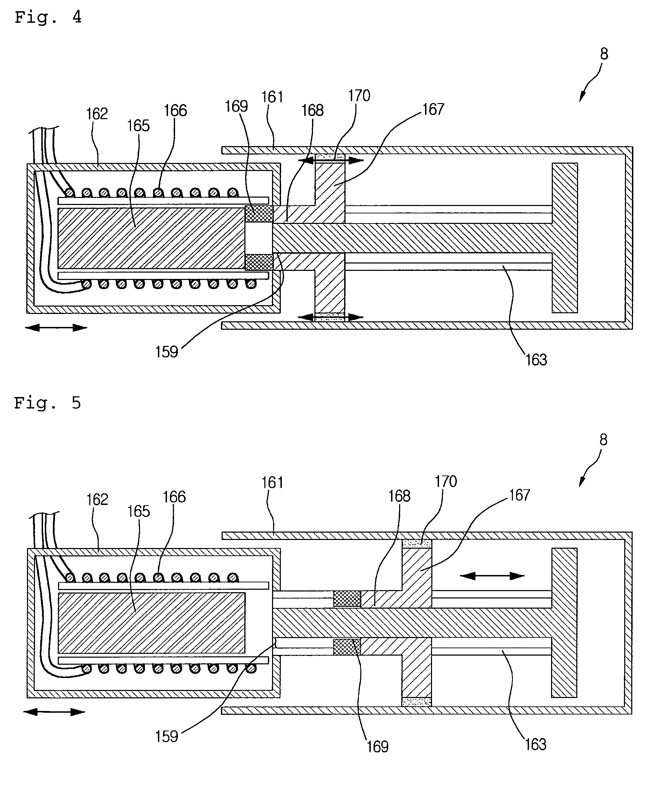

Fig. 2 shows a sectional view of the damper according to a first embodiment of the present invention, and Fig. 3 shows a sectional view taken along the line A-A' of Fig. 2.

As shown in the drawings, the damper 8 comprises a hollow cylinder 161, a rod 162 of which one end is inserted in the cylinder 161, a sliding rod 163 integrally formed on an end of the rod 162, a coil 166 disposed in the rod 162, an electromagnet 165 selectively magnetized by the coil 166, a pad holder 167 slidably disposed around an outer circumference of the sliding rod 163 and coupled on a proximal end of the rod 161 when the electromagnet 165 is magnetized, and a damping pad 170 disposed around an outer circumference of the pad holder 167 to generate damping force by a friction with an inner circumference of the cylinder 161.

The pad holder 167 is provided with protruded member 168 for allowing the pad holder 167 to move toward the rod 162 by attractive force between the electromagnet 165 and a magnetic member 169. The magnetic member 169 is fixed on the protruded member 168 to be attracted to the electromagnet 165. The protruded member 168 is formed to be identical in a shape to the magnetic member 169. The magnetic member 169 is formed of semicircular magnets or a plurality of circular arc-shape magnets spaced from each other at a predetermined distance. The magnetic member 169 may be formed of a material such as iron that can be attracted and repulsed by the electromagnet 165.

The rod 162 is provided at a proximal end with a plurality of insertion holes 159 formed in a shape identical to those of the protruded member 168 and the magnetic member 169 so that the magnetic member 169 can be attracted by and attached on the electromagnet 165. The sliding rod 163 is provided at an outer circumference with a plurality of guide grooves 164 in the formed of a spline shaft so that the pad holder 167 can be smoothly moved to the proximal end of the rod 162 by attractive force of the electromagnet 165.

The electromagnet 165, the magnetic member 169, and the protruded member 168 are all provided to move the pad holder 167 to a predetermined location, allowing a user to selectively operate the pad holder 167.

The operation of the above-described damper will be described hereinafter.

In an initial dewatering operation where a dewatering RPM is lower than a predetermined dewatering RPM, the damper 8 should generate relatively large damping force so that transient vibration of the drum 2 can be attenuated. In a steady dewatering operation where a dewatering RPM is higher than the predetermined dewatering RPM, since relatively small vibration is generated, the damping force generated by the damper 8 should be minimized so that vibration transmitted from the damper 8 to the case 3 can be attenuated. By this operation, the vibration and noise can be reduced in the washing machine.

In the initial dewatering operation generating the transient vibration, electric power is applied to the coil 166 to generate magnetic field on the electromagnet 165. By the magnetic field, attractive force is generated between the electromagnet 165 and the magnetic member 169. As a result, the magnetic member 169 is attached on a proximal end of the electromagnet 165 through the insertion holes 159. That is, the pad holder 167 and the rod 162 are operated in a state where they are integrated as a single body. That is, the operation of the rod 162 is directly related with the operation of the damping pad 170, performing the damping operation using frictional force.

In addition, in the steady dewatering operation, no electric power is applied to the coil 166. At this point, since the rod 162 is separated from the pad holder 167, no frictional force is generated between the damping pad 170 and the inner circumference of the cylinder 161.

Fig. 4 illustrates a damping operation for attenuating transient vibration of the drum when the washing machine is in the initial dewatering operation, while Fig. 5 illustrates a damping operation for attenuating relatively small vibration of a drum when a washing machine is in a steady dewatering operation.

Referring first to Fig. 4, the damper 8 is designed to generate high frictional damping force in the initial dewatering operation where the transient vibration is generated. That is, after the electric power is applied to the electromagnet 165, the drum 2 is spun to remove water from the laundry. In the initial dewatering operation, the transient vibration is generated on the drum 2 due to the laundry eccentrically distributed. By the transient vibration of the drum 2, the rod 162 linearly moves and the pad holder 167 moves to the proximal end of the rod 162 along the guide grooves 164 formed on the outer circumference of the sliding rod 163 by the attractive force between the electromagnet 165 disposed in the rod 162 and the magnetic member 169 fixed on the protruded member 168 of the pad holder 167. Since the magnetic member 169 is inserted into the rod 162 through the insertion holes 159 and the electromagnet 165 and the magnetic member 169 are attached to each other, the pad holder 167 is to be fixed on the proximal end of the rod 162.

In a state where the pad holder 167 is fixed on the proximal end of the rod 162, damping force enough to attenuate the transient vibration of the drum 2 that is generated in the initial dewatering operation can be obtained by frictional force generated between the damping pad 170 and the inner circumference of the cylinder 161 as the rod 162 linearly moves. Here, it should be noted that the operation of the rod 162 is relative to the operation of the cylinder 161.

Referring to Fig. 5, in the steady dewatering operation where the drum stably spins, relatively small vibration is generated on the drum 2. Therefore, the electric power being applied to the electromagnet 165 is cut off to degauss the electromagnet 165. As a result, the magnetic member 169 is separated from the electromagnet 165, whereby the pad holder 167 is released from the rod 162 and is fixed on a location of the cylinder 161.

In this state, the sliding rod 163 reciprocally moves along an inner circumference of the pad holder 167. That is, a location of the damping pad 170, the pad holder 167 which is integrated with the damping pad 170, the protruded member 168 and the magnetic member 169, with respect to the cylinder 161 is fixed. In addition, the protruded member 168 and the magnetic member 169 can slide while being guided by the guide grooves 164 of the sliding rod 163. That is, as the slide rod 163 reciprocally moves along the inner circumference of the pad holder 167, the small vibration of the drum 2 that is generated in the steady dewatering operation can be attenuated.

To provide a friction reducing effect in the steady dewatering operation, an additional damping member may be formed between the sliding rod 163 and the pad holder 167. At this point, in order to attenuate the relatively small vibration, a damping constant of the damping member should be lower than that of the damping pad 170.

Meanwhile, the drum 2 may conically rotate (rotate in a cone-shape, while rocking from side to side and moving up and down) when the laundry is eccentrically loaded in the drum 2. The unstable rotation may cause conical vibration of the tub 20, which is applied to the damper 8. At this point, the cylinder 161 and the rod 162 rotate relative to each other to create torsion. As the result, the torsion is applied to the damper 8. In the present invention, since the rotation of the sliding rod 163 may be suppressed by the protruded member 168 and the magnetic member 169, the sliding rod 163 cannot freely rotate. Furthermore, since the rotational force of the sliding rod 163 is transmitted to the damping pad 170 through the pad holder 167, the damping operation is realized by a frictional operation between the inner circumference of the cylinder 161 and the damping pad 170.

By the above-described operation, the vibration generated in the washing machine can be stably attenuated. That is, the damping force can be positively adjusted in response to the operation of the washing machine (i.e., the initial dewatering operation and the steady dewatering operation). That is, the low vibration and low noise can be easily realized for the washing machine. Here, the arrows on the Figs represent operation states of operation portions.

### Second Embodiment

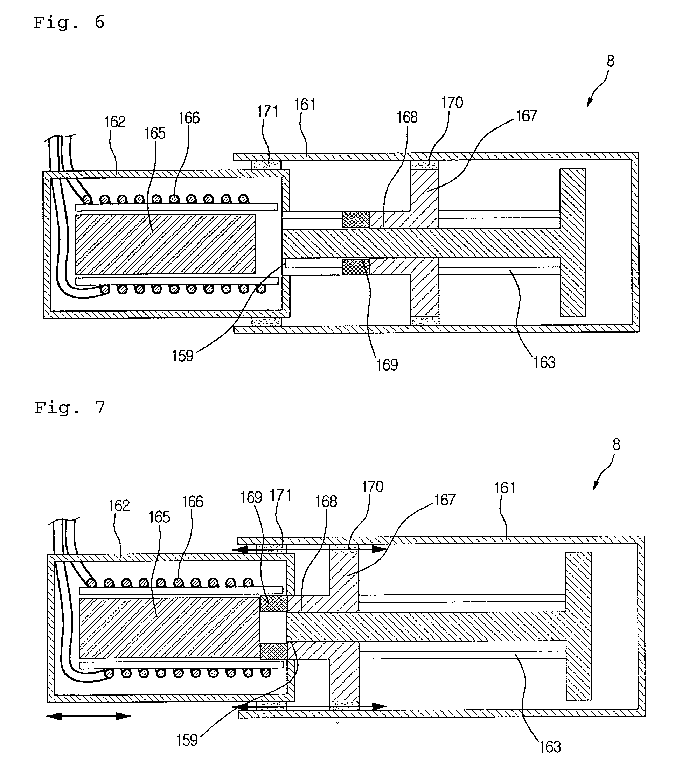

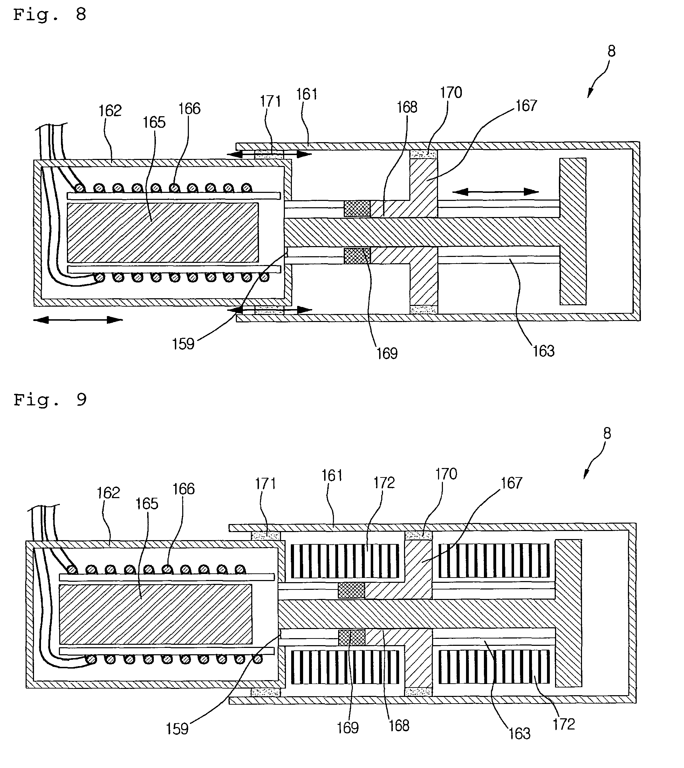

Figs. 6, 7 and 8 illustrate a second embodiment of the present invention. That is, Fig. 6 shows a sectional view of a damper of the second embodiment of the present invention, Fig. 7 shows the damper of this embodiment, illustrating a damping operation for attenuating transient vibration of a drum when a washing machine is in an initial dewatering operation, and Fig. 8 shows a damper of this embodiment, illustrating a damping operation for attenuating relatively small vibration of a drum when a washing machine is in a steady dewatering operation.

In this embodiment, to further improve damping force in the initial and/or steady dewatering operation, a second damping pad 171 is further provided so that frictional force is generated between the inner circumference of the cylinder 161 and the outer circumference of the rod 162.

That is, in the initial dewatering operation where the drum 2 is excessively vibrated, the damper of this embodiment is designed such that the bigger damping force including the damping force of the damping pad 170 fixed on the pad holder 167 can be applied to the inner circumference of the cylinder 161. A second damping pad 171 is further provided on the outer circumference of the rod 162 so that, even in the steady dewatering operation where relatively small vibration is incurred on the drum 2, relatively small damping force in addition to the damping force of the damping pad 170 fixed on the pad holder 170 can be exerted to attenuate the vibration of the drum 2.

The operation of the second embodiment will be described hereinafter.

In the initial dewatering operation where the transient vibration is generated, electric power is applied to the coil 166 so that attractive force is generated between the electromagnet 165 and the magnetic member 169. As a result, the pad holder 167 is fixed on the proximal end of the rod 162, whereby, as the rod linearly moves, frictional force is generated between the damping pad 170 and the inner circumference of the cylinder 161 and between the second damping pad 171 and the inner circumference of the cylinder 161, thereby attenuating the transient vibration of the drum 2.

In the steady dewatering operation, the electric power being applied to the coil 166 is cut off so that the pad holder 167 can be released from the rod 162. As the rod 162 linearly moves, frictional force is generated between the sliding rod 163 and an inner circumference of the pad holder 167, realizing the damping. At this point, the damping is further realized by frictional force between the second damping pad 171 and the inner circumference of the cylinder 161.

This embodiment provides the bigger damping force as a whole as compared with the first embodiment. Here, the arrows on the Figs represent operation states of operation portions.

### Third Embodiment

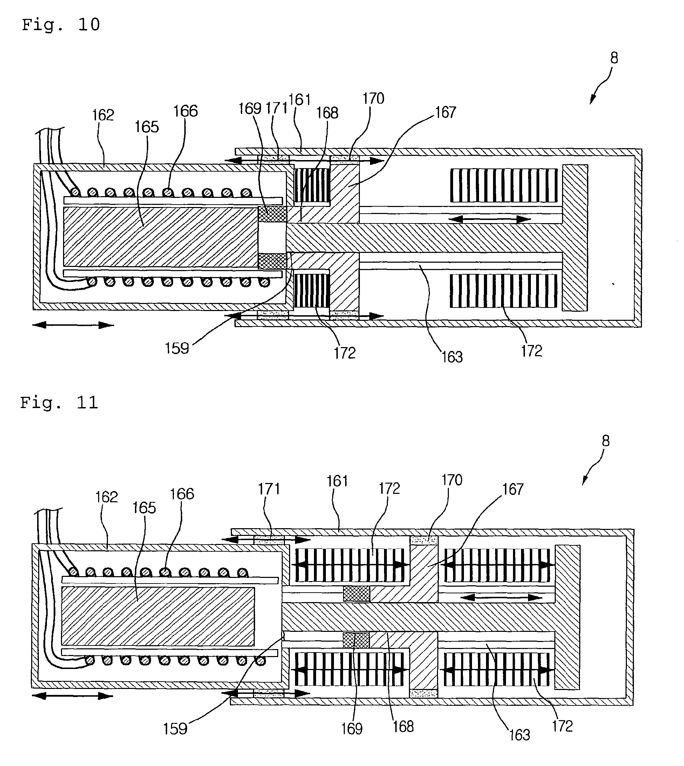

Figs. 9, 10 and 11 illustrate a third embodiment of the present invention. That is, Fig. 9 shows a sectional view of a damper according to a third embodiment of the present invention, Fig. 10 shows a damper of this embodiment, illustrating a damping operation for attenuating transient vibration of a drum when a washing machine is in an initial dewatering operation, and Fig. 11 shows the damper of this embodiment, illustrating a damping operation for attenuating relatively small vibration of a drum when a washing machine is in a steady dewatering operation.

In this embodiment, to completely separate the pad holder 167 from the rod 162 using elastic force when the electromagnet is degaussed and to quickly attenuate small vibration of the drum in the steady dewatering operation, an elastic member such as a sponge 172 is further formed on both sides of the pad holder 167.

The operation of the third embodiment will be described hereinafter.

The damping operation in the initial dewatering operation where the drum 2 is excessively vibrated is identical to the second embodiment, the detailed description of which will be omitted herein.

In the steady dewatering operation, the electric power being applied to the coil 166 is cut off to remove attractive force between the electromagnet 165 and the magnetic member 169. As a result, the pad holder 167 fixed on the proximal end of the rod 162 is easily separated from the rod 162 by elastic force of the sponge 172.

When vibration is generated, as the rod 162 linearly moves, frictional force occurs between the sliding rod 163 and an inner circumference of the pad holder 167, realizing the damping. At this point, the damping is further realized by frictional force between the second damping pad 171 and the inner circumference of the cylinder 161. In addition, by the repeated compressing/expanding operation of the sponge 172, the sliding rod 166 linearly moves along the inner circumference of the pad holder 167, thereby performing the damping. That is, since the damping is realized at three locations, the damping effect can be more improved (see Fig. 11).

### Fourth Embodiment

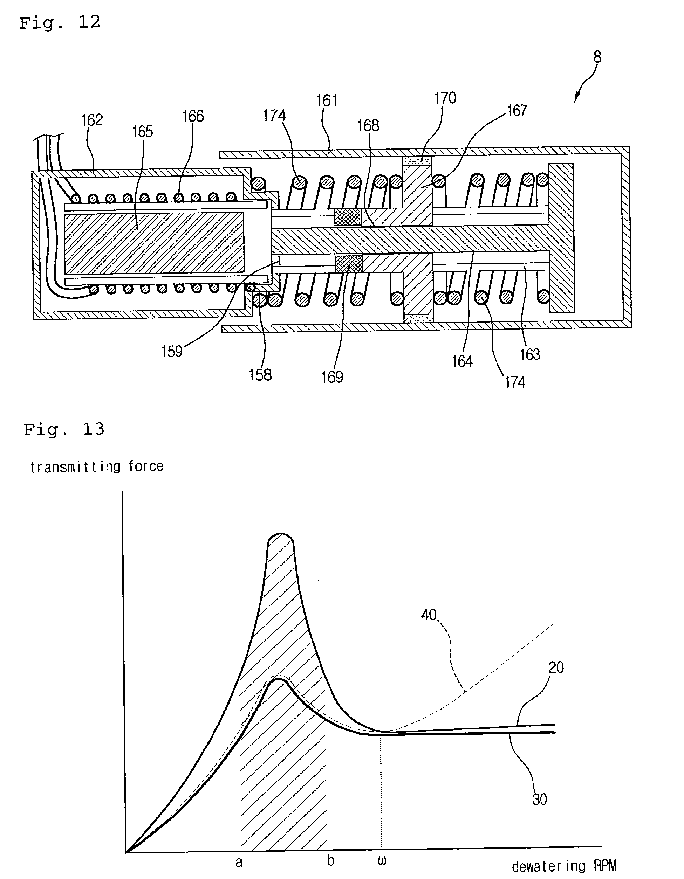

Fig. 12 shows a sectional view of a damper according to a fourth embodiment of the present invention.

The fourth embodiment is identical to the third embodiment except that a spring 174 is used as the elastic member. To support the spring 174, the rod 162 is provided at the proximal end with a stepped portion 158. Since other parts of the fourth embodiment are identical to those of the third embodiment, the detailed description thereof will be omitted herein.

Fig. 13 shows a graph illustrating a test result of the fourth embodiment.

In the graph, a horizontal axis indicates a dewatering RPM and a vertical axis indicates transmitting force for transmitting vibration that in not attenuated by the damper to the case. A line 40 indicates a case of the conventional one-stage damper, a line 20 indicates a case of the conventional two-stage damper and a line 30 indicates a case of a damper of this embodiment. As shown in the drawing, the damper of this embodiment reduces the transmitting force in the steady dewatering section (over ω) as well as in the transient vibration section (between "a" and "b"),

### Fifth Embodiment

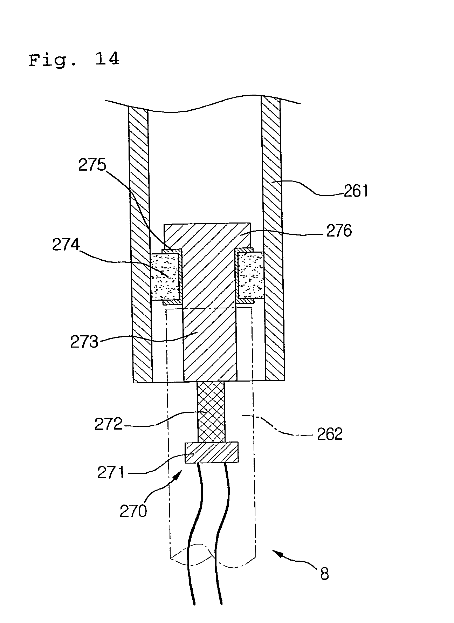

Figs. 14, 15 and 16 show a damper according to a fifth embodiment of the present invention.

Referring first to Fig. 14, a damper 8 of this embodiment includes a movable part 270 expandable in a longitudinal direction by electric power, a hollow rod 262 for receiving the movable part 270, the rod 262 being connected to a case (see 3 of Fig. 1), a hollow cylinder 261 for receiving the rod 262, the cylinder 261 being connected to a tube (see 1 of Fig.1), a sliding rod 273 inserted in the rod 262 to be linearly movable in response to a length variation of the movable part 270, a stopper end 276 formed on an inserted end of the rod 173, a pad holder 275 disposed on an outer circumference of the sliding rod 273, and a damping pad 274 disposed on the pad holder 175 to generate damping force using frictional force generated between the damping pad and an inner circumference of the cylinder 161.

The movable part 270 includes a heater 271 generating heat when electric power is applied and a thermal expanding member 272 expanding in the longitudinal direction by the heat generated by the heater 271. The pad holder 275 is movable between the rod 262 and the stopper end 276. While the pad holder 275 is pushed and moved by the rod 262 and the stopper end 276, a frictional force is generated by the pad holder 275 between the inner circumference of the cylinder 261 and the damping pad 274.

The operation of this embodiment will be described hereinafter.

When electric power is applied to the movable part 270, a length of the thermal expanding member 272 is increased by heat generated by the heater, as a result of which a predetermined gap is defined between the rod 262 and the stopper end 276. The pad holder 275 is movable in the gap. Therefore, even when outer vibration is applied, the pad holder 275 is not moved but fixed in the cylinder 261, not generating damping force.

However, when electric power is not applied, the thermal expanding member 272 is contracted so as to be fixed by the rod 162 and the stopper end 176. Therefore, when external vibration is applied, the pad holder 275 moves together with the rod 262 and the damping is realized by frictional force generated between the damping pad 274 and the inner circumference of the cylinder 261.

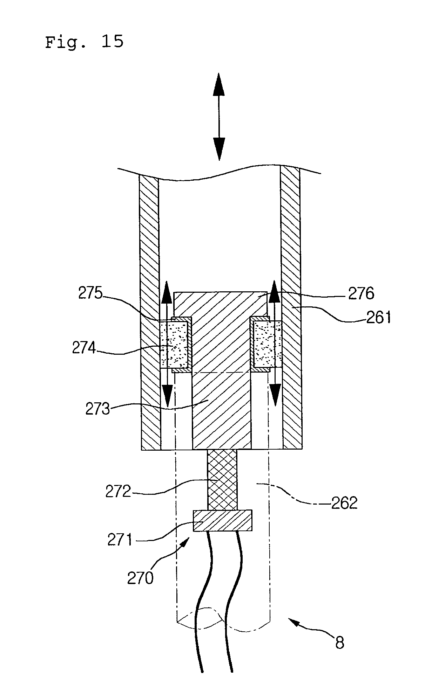

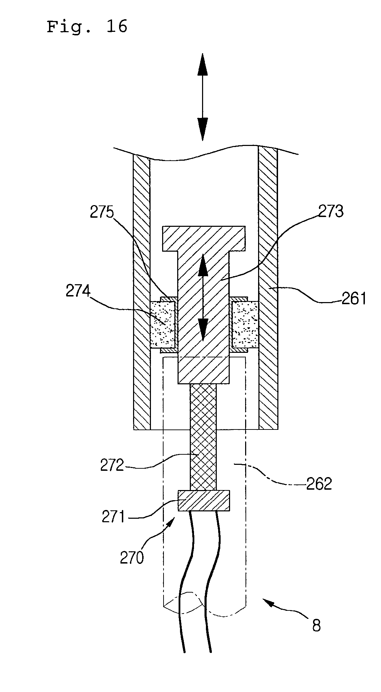

Fig. 15 shows the damper of this embodiment, illustrating a damping operation for attenuating transient vibration of a drum when a washing machine is in an initial dewatering operation, and Fig. 16 shows the damper of this embodiment, illustrating a damping operation for attenuating relatively small vibration of a drum when a washing machine is in a steady dewatering operation.

Referring first to Fig. 15, in the initial dewatering operation where the transient vibration is generated on the drum 2, electric power is cut off to contract the thermal expanding member 272. As a result, the sliding rod 273 moves to the inserted end of the rod 262 and the pad holder 275 is fixed between the inserted end and the stopper end 276. In a state where the pad holder 275 is fixed, relatively large vibration generated on the drum 2 in the initial dewatering operation can be effectively attenuated by frictional force generated by relative motion between the cylinder 261 and the damping pad 274.

It may be possible an additional damping pad is further formed on an inserted outer circumference of the rod 262 to further improve damping force.

Referring to Fig. 16, in the steady dewatering operation, electric power is applied to longitudinally expand the thermal expanding member 272 using heat generated by the heater 271. When the thermal expanding member 272 expands, the sling rod 273 is linearly pushed by a predetermined length, and the pad holder 275 is to freely move along the sliding rod 273. That is, in a state where the damping pad 274 fixed on the pad holder 275 contacts the inner circumference of the cylinder 261, the pad holder 275 is movable between the inserted end of the rod 262 and the stopper end 276.

In this state, when the cylinder 261 or the rod 262 moved in the longitudinal direction, the damping pad 274 moves together with the cylinder 261, thereby not generating frictional force. However, the damping is realized by relatively small damping force generated between the inner circumference of the pad holder 265 and the outer circumference of the rod 273. Therefore, the relatively small vibration of the drum is attenuated.

When the relatively small vibration of the drum is higher than a predetermined level, an additional damping pad may be further provided on the outer circumference of the rod 262 so that enough frictional force is generated between the damping pad and the inner circumference of the cylinder 261.

In addition, by adjusting the expansion of the thermal expanding member 272, it is possible to set a start point of the damping realized by the damping pad 274. This provides an advantage of easily controlling the damper.

### Sixth Embodiment

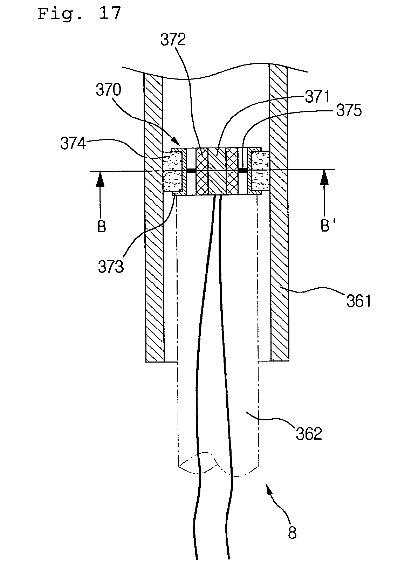

Figs. 17 to 20 show a sixth embodiment of the present invention.

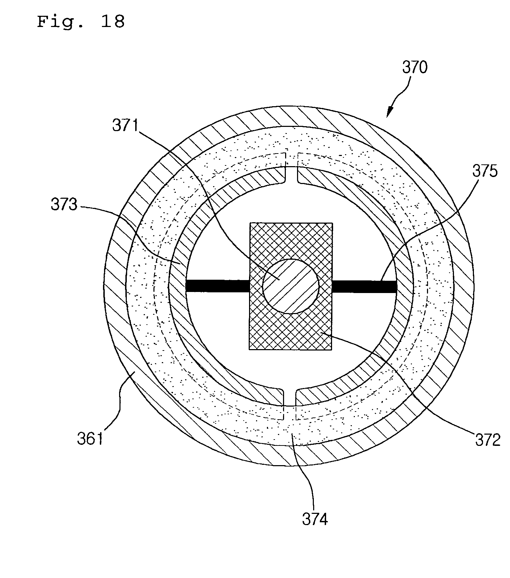

Fig. 17 shows a sectional view of a damper according to a sixth embodiment of the present invention, and Fig. 18 is a sectional view taken along the line B-B of Fig. 18.

As shown in the drawings, a damper 8 of this embodiment includes a hollow cylinder 361 connected to the tub 1, a rod 362 having a first end connected to a case 3 and a second end inserted in the cylinder 361, a movable part 370 expandable in a lateral direction by electric power, the movable part 370 being mounted on the second end of the rod 362, pad holders 373 expanding and contracting in accordance with a width variation of the movable part 370, the pad holders 373 being mounted on both sides of the movable part 370, and a damping pad 374 for applying damping force in a radial direction of the cylinder 361 in accordance with expansion/contraction of the pad holders 373, the damping pads 374 being mounted on outer circumferences of the pad holders 373.

The movable part 370 includes a heater 371 generating heat when electric power is applied and a thermal expanding member 372 expanding in the lateral direction by the heat generated by the heater 371.

The pad holders 373 are formed in a semicircular-shape so that they can expand and contract in response to the width variation of the movable part 370. The pad holders 373 are installed on both sides of the movable part 370 by fixing rods 375.

The damping pads 374 are formed in an identical shape to those of the outer circumferences of the pad holders 373 so that damping force can be applied in the radial direction of the cylinder 361 as the pad holders 373 expand and contract. Alternatively, the damping pad 374 may be formed in a single cylindrical shape to enclose all of the pad holders 373.

The operation of this embodiment will be described hereinafter.

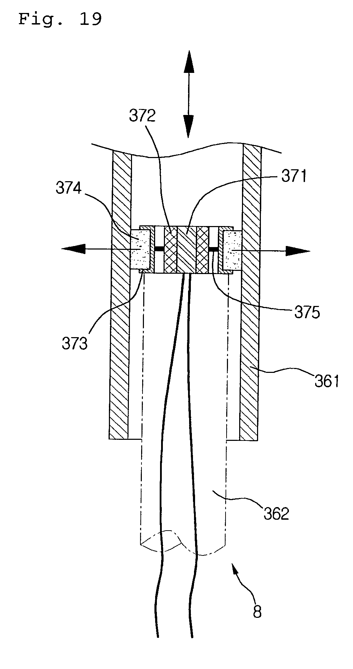

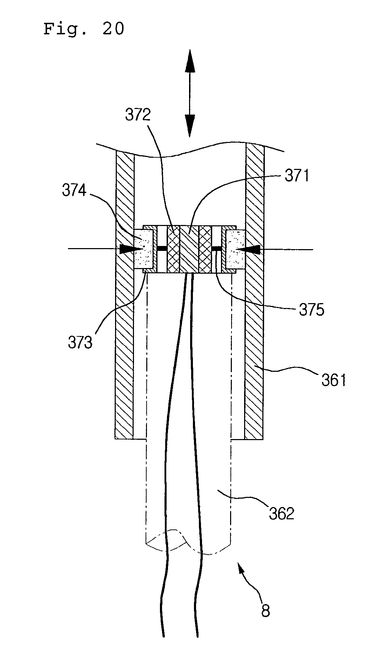

Fig. 19 shows the damper of this embodiment, illustrating a damping operation for attenuating transient vibration of a drum when a washing machine is in an initial dewatering operation, and Fig. 20 shows the damper of this embodiment, illustrating a damping operation for attenuating relatively small vibration of a drum when a washing machine is in a steady dewatering operation.

Referring first to Fig. 19, electric power is applied to the heater 371 and the thermal expanding member 372 is expanded in the lateral direction by the heat generated by the heater 371. As a result, the pad holders 373 are expanded in the radial direction of the cylinder 361. Accordingly, relatively large frictional force is generated between the damping pads 374 and the inner circumference of the cylinder 361. Therefore, in the initial dewatering operation where the drum is excessively vibrated, the transient vibration can be quickly attenuated by high damping force generated between the damping pad 374 and the cylinder 361.

Referring to Fig. 20, in the steady dewatering operation where the drum stably spins to generate relatively small vibration, electric power is cut off to contract the thermal expanding member 372 and the pad holders 373 are returned to their initial positions. Relatively small frictional force is generated between the damping pads 374 and the inner circumference of the cylinder 361. As a result, the small vibration generated on the drum 2 generated in the steady dewatering operation can be quickly attenuated by the small damping force generated by the damping pads 374 and the cylinder 361.

As described above, the present invention is designed to effectively attenuate the vibration generated in the washing machine, thereby realizing the low vibration/low noise washing machine. Also, the present invention is designed to positively control the operation of the washing machine in response to a current operation state of the washing machine, making it possible to stably operate the washing machine.

In addition, since damping force of the washing machine can be adjusted in response to a preset condition set by the user, the vibration of the washing machine can be properly attenuated regardless of its current processing cycle.

In conclusion, the damper of the present invention allows the washing machine to be stably operated with a low noise. In addition, the damper is not easily damaged even when strong vibration is transmitted from the movable part.

It will be apparent to those skilled in the art that various modifications and variations can be made in the present invention. Thus, it is intended that the present invention covers the modifications and variations of this invention provided they come within the scope of the appended claims and their equivalents.

## Claims

1. A damper for a washing machine, comprising:
an external electric source;
a movable part for adjusting damping force using the external electric source;
a damping pad for varying an exerting state of the damping force in response to an operation of the movable part;
a pad holder for supporting the damping pad;
a cylinder contacting the damping pad to generate the damping force, the cylinder being connected to one of a movable part and case of the washing machine; and
a rod inserted in the cylinder and connected to the other of the movable part and case of the washing machine, the pad holder being disposed on an outer circumference of the rod.

2. The damper according to claim 1, wherein the movable part comprises:
an electromagnet formed on a predetermined location of the rod and selectively magnetized; and
a magnetic member formed on the pad holder, the magnetic member moving by the electromagnet.

3. The damper according to claim 1, wherein the movable part comprises:
a thermal expanding member formed on a predetermined location of the rod; and
a sliding rod connected to an expanding end of the thermal expanding member, the sliding rod being provided with a stopper end selectively contacting the pad holder.

4. The damper according to claim 1, wherein the movable part comprises:
a heater formed on a predetermined location of the rod and heated by the external electric power; and
a thermal expanding member expanding by the heat transmitted from the heat to compressing the pad holder.

5. The damper according to claim 4, wherein a fixing bar is disposed between the thermal expanding member and the pad holder to transmit expanding force.

6. The damper according to claim 1, wherein the movable part is designed to generate heat, a magnetic field, or a shape variation by the external electric source.

7. A damper for a washing machine, comprising:
an external electric source;
an electromagnet for selectively generating an magnetic field by the external electric source;
a pad holder for fixing a magnetic member operated by the magnetic field;
a damping pad supported on the pad holder;
a cylinder contacting the damping pad to generate the damping force, the cylinder being connected to one of a movable part and case of the washing machine; and
a rod for fixing the electromagnet, the rod being inserted in the cylinder and connected to the other of the movable part and case of the washing machine, the pad holder being disposed on an outer circumference of the rod.

8. The damper of claim 7, wherein the magnetic member is protruded toward the electromagnet.

9. The damper of claim 7, wherein the magnetic member is fixed on a protruded portion formed on the pad holder and protruded toward the electromagnet.

10. The damper of claim 7, wherein the magnetic member comprises a plurality of a circular arc-shaped members that are spaced from each other at a predetermined distance.

11. The damper of claim 7, wherein the rod is provided with a guide groove for receiving the magnetic member.

12. The damper of claim 7, wherein the rod is provided at an outer circumference with a second damping pad contacting the inner circumference of the cylinder.

13. The damper of claim 7, wherein the pad holder is provided at both sides with elastic members.

14. The damper of claim 13, wherein the elastic member is a spring.

15. The damper of claim 13, wherein the elastic member is a sponge.

16. A damper for a washing machine, comprising:
an external electric source;
a thermal expanding member selectively expanding by the external electric source;
a sliding rod displacing by the thermal expanding member;
a pad holder disposed around an outer circumference of the sliding rod;
a damping pad supported on the pad holder;
a cylinder contacting the damping pad to generate the damping force, the cylinder being connected to one of a movable part and case of the washing machine; and
a rod connected to the sliding rode, inserted in the cylinder, and connected to the other of the movable part and case of the washing machine.

17. The damper of claim 16, wherein the pad holder is disposed between an inserted end of the sliding rod and an inserted end of the rod.

18. A damper for a washing machine, comprising:
an external electric source;
a thermal expanding member selectively expanding by the external electric source;
a pad holder compressed by the thermal expanding member;
a damping pad formed on an outer circumference of the pad holder;
a cylinder contacting the damping pad to generate the damping force, the cylinder being connected to one of a movable part and case of the washing machine; and
a rod connected to the sliding rode, inserted in the cylinder, and connected to the other of the movable part and case of the washing machine.

19. The damper of claim 18, wherein the pad holder is formed in a circular arc-shape to expand and contract in a radial direction.

20. The damper of claim 18, wherein a fixing rod is disposed between the pad holder and the thermal expanding member.

21. A damper for a washing machine, comprising:
a stationary case disposed in the washing machine;
a movable part disposed in the washing machine;
a cylinder connected to one of the stationary case and the movable part;
a rod inserted in the cylinder, the rod being connected to the other of the stationary case and the movable part;
a damping pad contacting an inner circumference of the cylinder to selectively perform damping;
a pad holder for supporting the damping pad; and
a movable part for adjusting a state of the pad holder using the external electric source.
